# EUROPÄISCHE PATENTANMELDUNG

(11) **EP 1 930 201 A1**
(43) Veröffentlichungstag der Anmeldung: **11.06.2008**
(21) Anmeldenummer: 07118309.9
(22) Anmeldetag: 11.10.2007
(51) Int. Cl.: B60K 28/06, B60R 16/023

(54) **Verfahren zur Möglichkeit der Anpassung der Fahrsituation eines von einem Fahrer geführten Fahrzeugs**

(30) Priorität: 05.12.2006 DE 102006057278
(71) Anmelder: ROBERT BOSCH GMBH, 70442 Stuttgart (DE)
(72) Erfinder: Placke, Lars, 30163, Hannover (DE); Biester, Lars, 96047, Bamberg (DE)

(57) **Zusammenfassung**

Die Erfindung betrifft ein Verfahren zur Möglichkeit der Anpassung der Fahrsituation eines von einem Fahrer geführten Fahrzeugs, insbesondere Kraftfahrzeugs, wobei der Fahrerzustand und/oder die Fahrsituation berücksichtigt wird/werden und wobei mindestens ein Assistenzsystem, mindestens eine Fahrerinformation und/oder mindestens eine Fahreranweisung in Abhängigkeit von der Art der momentan auf den Fahrer wirkenden Belastung beeinflusst wird.

Weiter betrifft die Erfindung ein System zur Möglichkeit der Anpassung der Fahrsituation eines von einem Fahrer geführten Fahrzeugs, insbesondere Kraftfahrzeugs, wobei der Fahrerzustand und/oder die Fahrsituation berücksichtigt wird/werden und wobei mindestens ein Assistenzsystem (AS), mindestens eine Fahrerinformation (FI) und/oder mindestens eine Fahreranweisung (FA) in Abhängigkeit von der Art der momentan auf den Fahrer wirkenden Belastung (B) beeinflusst wird.

## Beschreibung

Die Erfindung betrifft ein verfahren zur Möglichkeit der Anpassung der Fahrsituation eines von einem Fahrer geführten Fahrzeugs nach Oberbegriff des Anspruchs 1.

### Stand der Technik

Im Stand der Technik sind verschiedene realisierte oder vorgeschlagene Systeme zur adaptiven Gestaltung von Funktionen zur Informationsdarstellung im Fahrzeugbereich bekannt. Dies bedeutet, dass verschiedene, einem Fahrer eines Fahrzeugs zur Verfügung stehende Funktionen beziehungsweise für ihn bereit gehaltene und/oder dargestellte Informationen an unterschiedliche Betriebszustände angepasst werden können. Diese Adaptivität bezieht sich dabei in der Regel auf Anpassungen an den Fahrerzustand (als insbesondere darauf, ob der Fahrer eine Belastung erfährt) oder die Fahrsituation. Im ersten Fall spielen insgesamt die Aspekte der Fahrerbelastung und Fahrerbeanspruchung, gerade etwa durch eine gegebene Fahrsituation, beispielsweise einen Überholvorgang oder äußere Umstände, etwa Dunkelheit, eine bedeutende Rolle. Die vorgenommenen Adaptionen laufen hierbei schematisch ab. Hierbei wird nicht berücksichtigt, auf welchen Verarbeitungsprozess beim Fahrer im Rahmen der Fahraufgabe, also des Führens des Fahrzeugs, eine Belastung ausgeübt wird. Die adaptiven Systemlösungen werden nicht auf verschiedene Formen von Belastungen angepasst.

Aus der DE 194 61 871 ist eine Fahrerinformationsvorrichtung bekannt, bei der mittels Sensoren verschiedene Betriebsdaten erfasst und einer Steuereinheit zugeführt werden. Die Steuereinheit stelle hieraus unter Berücksichtigung des momentanen Betriebszustandes eine Rangfolge derjenigen Betriebsdaten zusammen, die für den Fahrer unter den aktuellen Betriebsbedingungen relevant sind.

Aufgabe der Erfindung ist, ein Verfahren und ein System zur Möglichkeit der Anpassung der Fahrsituation an solche Umstände vorzuschlagen, wobei die genannte Nachteile vermieden werden. Insbesondere soll im Rahmen der Adaption berücksichtigt werden, welcher Art die auf den Fahrer einwirkende Belastung ist.

### Offenbarung der Erfindung

Hierzu wird ein Verfahren vorgeschlagen zur Möglichkeit der Anpassung der Fahrsituation eines von einem Fahrer geführten Fahrzeugs, insbesondere Kraftfahrzeugs, wobei der Fahrerzustand und/oder die Fahrsituation berücksichtigt wird/werden und wobei mindestens ein Assistenzsystem, mindestens eine Fahrerinformation und/oder mindestens eine Fahreranweisung in Abhängigkeit von der Art der momentan auf den Fahrer wirkenden Belastung beeinflusst wird. Einer Adaption unterfallende Komponenten werden folglich zunächst klassifiziert in solche, die im weitesten Sinne Assistenzsysteme darstellen, also beispielsweise Bremsassistenten, Abstandswarner oder Abstandshaltevorrichtungen, Tempomaten und so weiter, dann in dem Fahrer zur Verfügung gestellte Fahrerinformationen, wobei hierunter auch Systeme zu fassen sind, die der Information des Fahrers über den Zustand seines Fahrzeugs, des Fahrvorgangs oder seiner selbst unterrichten, und in Fahreranweisungen, also im weitesten Sinne an den Fahrer gerichtete Aufforderungen, bestimmte Handlungen vorzunehmen oder zu unterlassen oder sein Verhalten und/oder seine Fahrweise in einer bestimmten Art und Weise einzurichten. Diese Gruppierungen können im weitesten Sinne als Adaptivitätsformen bezeichnet werden.

In einer weiteren Ausführung des Verfahrens ist vorgesehen, dass die Art der momentan auf den Fahrer wirkenden Belastung differenziert wird nach Aufmerksamkeit, Informationsverarbeitung und Motorik/Eingaben des Fahrers. Unter Aufmerksamkeit ist hier im weitesten Sinne zu verstehen, worauf das gerichtete Interesse beziehungsweise die Wahrnehmungsnachsuche des Fahrers tatsächlich gerichtet ist, unter Informationsverarbeitung wird verstanden, wie Informationen vom Fahrer aufgenommen und abgearbeitet werden, und unter Motorik/Eingabe wird verstanden, was der Fahrer abhängig vom Ergebnis der Informationsverarbeitung tut. In diesen Bereichen können ganz spezifische Belastungen auftreten, so dass diese drei Obergruppen als "Belastungsarten" unterschieden werden können.

In einer weiteren Ausgestaltung des Verfahrens ist vorgesehen, dass die Belastungsart Aufmerksamkeit differenziert wird nach visueller, akustischer und/oder haptischer Aufmerksamkeit. Diese Differenzierung trägt dem Umstand Rechnung, dass die Aufmerksamkeit des Fahrers sowohl visuell, also über den Sehsinn, akustisch, also über sein Gehör, sowie haptisch, also über seine taktile Wahrnehmung, beansprucht sein kann. Eine visuelle Belastung bezüglich der Aufmerksamkeit liegt beispielsweise dann vor, wenn eine Vielzahl von Lichtreizen insbesondere bei dunkler Umgebung, Regenwetter und vielen Lichtquellen, etwa Scheinwerfern des Gegenverkehrs, auf den Fahrer einwirken. Eine akustische Belastung hinsichtlich der Aufmerksamkeit liegt beispielsweise vor, wenn das Gehör des Fahrers durch eine Vielzahl von akustischen Reizen oder durch laute akustische Reize in der Wahrnehmung akustischer Informationen beeinträchtigt wird, es also beispielsweise erschwert wird, relevante akustische Informationen von irrelevanten zu trennen. Eine Beeinträchtigung der haptischen Aufmerksamkeit des Fahrers liegt etwa vor, wenn Vibrationen vorliegen, die die Wahrnehmung von Straßenzustand und/oder von gewohnten Fahrzuständen im Fahrzeug erschweren oder vereiteln, oder wenn der Fahrer beispielsweise durch Nervosität oder Angstzustände in der haptischen Wahrnehmung und Taktilität beeinträchtigt ist.

Weiter ist eine Verfahrensform vorgesehen, die die Belastungsart Informationsverarbeitung differenziert nach Informationsaufnahme, Erkennung, Interpretation, Vergleichen, Klassifizieren, Bewerten, Planen, Entscheiden und/oder Gedächtnis. Exemplarisch bedeuten diese Gruppen unter Informationsaufnahme die Art, dass beziehungsweise wie der Fahrer gezielt eine Information aufnimmt, Erkennung meint im weitesten Sinne das Erkennen von Mustern, die eine bestimmte Schlussfolgerung auf das Vorliegen eines bestimmten Zustandes nahe legen, insbesondere hinsichtlich von äußeren Einflüssen, Interpretation, Vergleichen, Klassifizieren und Bewerten bezieht sich hierbei auf die eigentliche Verarbeitung aufgenommener und/oder erkannter Information, durch Deutung, in Bezug setzen zu Bekanntem, Einteilen in bekannte Gruppen und Gewichten; Planen, Entscheiden und Gedächtnis bezieht sich auf die hieraus abgeleiteten Handlungen, wobei Planen insbesondere ein zielgerichtetes Lenken von Verhalten umfasst, Entscheiden das Auswählen zwischen mehreren alternativen Handlungsformen und Gedächtnis das Merken von möglicherweise relevanten Informationen, um diese einem gegebenenfalls späteren Handeln zugrunde zu legen.

Eine weitere Ausgestaltung des Verfahrens sieht eine Differenzierung der Informationsaufnahme vor nach visueller, akustischer und/oder haptischer Informationsaufnahme. Die visuelle Informationsaufnahme und die daraus resultierende Belastungsform erfolgt folglich über den Sehsinn, die akustische über den Hörsinn und die haptische über den taktilen Sinn des Fahrers. Entsprechend werden Belastungsformen ausgebildet.

Weiter ist eine Verfahrensausgestaltung vorgeschlagen, die die Belastungsart Motorik/Eingaben differenziert nach sprachlichen, haptischen betreffend Beine und/oder Füße und haptischen betreffend Arme und/oder Hände Belastungsarten. Die sprachliche Belastungsart bezieht sich hierbei im weitesten Sinne auf sprachgesteuerte Systeme, insbesondere unter Verwendung von Spracherkennungssystemen, die Eingabeart haptisch mit Beinen und/oder Füßen bezieht sich im Wesentlichen auf die Pedalerie des Fahrzeugs, also vor allem Gas- beziehungsweise Fahrpedal und Bremspedal, bei manuell geschalteten Fahrzeugen auch auf die Kupplung, und die auf Hände und Arme bezogene haptische Belastungsform unter Motorik/Eingaben bezieht sich auf die mit Händen und/oder Armen getätigten Eingaben, insbesondere also den Lenkvorgang, die Auswahl einer Fahrstufe beziehungsweise eines Ganges, sowie die Betätigung von weiteren Hebeln und Schaltern (beispielsweise Blinker, Klimaanlage/Thermostatschalter, Telefon, Radio, Tastaturen et cetera).

Eine weitere Verfahrensausgestaltung sieht vor, dass die Beeinflussung des mindestens einen Assistenzsystems erfolgt durch Aktivieren/Deaktivieren einer Funktion, Ändern mindestens eines Parameters und/oder Wertebereichs, Anpassung des Automatisierungsgrades und/oder Anpassung der Interaktionsabfolge. Hierbei wird nun, in Abhängigkeit von einer Belastungsart, die Adaptivitätsform beeinflusst, also beispielsweise durch Aktivieren oder Deaktivieren einer Funktion, etwa eines Abstandswarners, das Ändern mindestens eines Parameters und/oder Wertebereichs, also beispielsweise auch einer Abstandsregelung, die etwa der gesteigerten Belastung des Fahrers durch Annahme einer verlängerten Reaktionszeit Rechnung tragen kann, die Anpassung des Automatisierungsgrades, wobei eine automatische Zuschaltung oder Empfehlung von Assistenzsystemen erfolgen kann, und/oder die Anpassung der Interaktionsfolge, ob also bestimmte Handlungen oder Hilfen parallel oder sequenziell erfolgen beziehungsweise angeboten werden, oder in welcher Reihenfolge dies bei sequenzieller Abfolge geschieht.

In einer weiteren Verfahrensausgestaltung ist vorgesehen, dass die Beeinflussung der Fahrerinformation erfolgt durch Anpassung des Sinneskanals, der Modalität und/oder des Interaktionsstils. Mit Anpassung des Sinneskanals ist hierbei gemeint, dass etwa anstelle einer visuellen Information eine akustische bereitgestellt wird (wenn beispielsweise durch visuelle Überforderung des Fahrers es wenig Sinn macht, einen vom Fahrer abzulesenden Text auszugeben, sondern der Fahrer eher auf einen akustischen Hinweis reagieren wird). Unter Modalität ist zu verstehen, dass als Unterbegriff des jeweiligen Sinneskanals die Darstellungsart geändert wird, etwa im Sinneskanal Akustik wird anstelle eines ausgegebenen Textes ein Warnton erzeugt, beziehungsweise ein Warnton in seiner Art geändert. Unter Interaktionsstil ist zu verstehen, ob dem Fahrer Hinweise oder Aufforderungen eher direktiv oder kooperativ gegeben werden, ob ihm also etwas eher befohlen oder empfohlen wird.

In einer weiteren Ausgestaltung des Verfahrens erfolgt die Beeinflussung der Fahreranweisung durch Anpassung der syntaktischen Ebene, der Spatial Layout-Ebene, der lexikalischen beziehungsweise ikonografischen Ebene, der Token- oder Zeichen-Ebene, und/oder der physikalischen Ebene. Diese Adaptivität bezieht sich folglich im weitesten Sinne auf die Darstellung, die dem Fahrer in einer gegebenen Situation abhängig von der auf ihn einwirkenden Belastung gegeben wird. Die syntaktische Ebene bezieht sich hierbei auf die Reihenfolge verschiedener Aussagen, die dem Fahrer als Information dienen; diese werden außer nach ihrer Wichtigkeit auch nach der für den Fahrer sinnvollsten Wahrnehmungsart in Abhängigkeit von der auf ihn einwirkenden Belastung getaktet. Die Spatial Layout-Ebene bezieht sich auf die Darstellung von Informationen innerhalb eines Kontextes, beispielsweise die Veränderung eines Ausschnittes einer Karte oder der Konzentration auf bestimmte, in einer bestimmten Belastungsart und Fahrsituation relevanten Parameter als Auswahl aus an sich zur Verfügung stehenden, mehreren Werten. Die lexikalische und die ikonographische Ebene bezieht sich auf die Darstellung im visuellen Kanal; hierbei ist gemeint, dass einem Fahrer abhängig von seinem Belastungszustand und der auf ihn einwirkenden Belastungsart, beispielsweise anstelle eines Textes, den er wahrnehmen, verarbeiten und entsprechend handeln müsste, lediglich ein Zeichen, ein Ikon, oder eine ähnliche verkürzte grafische Darstellung dargestellt wird. Dies ist insbesondere dann sinnvoll, wenn der Fahrer aufgrund der auf ihn einwirkenden Belastungsart keine Zeit hat, einen Text zu lesen, oder eine Verarbeitung von gelesener Information zu lange dauernd würde. Die ikonographische Darstellung bietet hierbei auch den Vorteil, dass mit zunehmender Verwendung durch den Fahrer eine Art bedingter Reflex auftritt, der bestimmtes Handeln mit der Darstellung eines bestimmten Zeichens verknüpft. Dies erlaubt beispielsweise in Gefahrensituationen eine sehr zielsichere, treffende Information des Fahrers mit hohem Aufmerksamkeitswert und sehr guter Chance der richtigen Befolgung. Die Token- oder Zeichen-Ebene bezieht sich auf die Darstellung der Information als Buchstaben oder Zahl, im weitesten Sinne als grafische oder numerische Zeichen. Die physikalische Ebene bezieht sich auf die Gestaltung, die Größe, die Lautstärke und entsprechende Eigenschaften der angebotenen Information und/oder Nachricht. Beispielsweise kann ein Warnsignal besonders groß, besonders farbig (beispielsweise leuchtend rot) als Zeichen auf die Scheibe projiziert oder anderweitig geeignet dargestellt werden, sodass der Fahrer es in seiner Eigenschaft als Warnhinweis unmissverständlich erkennt, wobei dieses zu dem durch einen Warnton von unangenehmer Frequenz und, gemessen am im Fahrzeug herrschenden Schalldruck, ausreichend hoher Lautstärke unterlegt sein kann.

Weiter wird ein System vorgeschlagen zur Möglichkeit der Anpassung der Fahrsituation eines von einem Fahrer geführten Fahrzeugs, insbesondere Kraftfahrzeugs, wobei der Fahrerzustand und/oder die Fahrsituation berücksichtigt wird/werden und wobei mindestens ein Assistenzsystem, mindestens eine Fahrerinformation und/oder mindestens eine Fahreranweisung in Abhängigkeit von der Art der momentan auf den Fahrer wirkenden Belastung beeinflusst wird. Vorgeschlagen wird folglich ein System, das zur Ausführung der oben näher beschriebenen Verfahren geeignet ist. Unter Möglichkeit der Anpassung der Fahrsituation ist hierbei gemeint, dass die Anpassung der Fahrsituation (also beispielsweise Geschwindigkeit) nicht automatisch erfolgt, sondern dass dem Fahrer die Möglichkeit gegeben werden soll, durch Bereitstellung der genannten Systeme und Informationen beziehungsweise Empfehlungen, diese Fahrsituation eigenverantwortlich zu ändern. Das System macht einerseits Gebrauch von in dem Fahrzeug bereits vorhandener Sensorik, wie sie beispielsweise für Assistenzsysteme oder bereits bekannte beziehungsweise vorgeschlagene Fahrerinformationssysteme Verwendung findet. Das System kann aber auch, sofern eine solche nicht vorhanden ist, eine eigene Sensorik aufweisen, wobei diese durch aus dem Stand der Technik bekannte, zur Erfassung von beschriebenen Belastungsformen und Fahrzuständen geeigneten Werteaufnehmern und Werteverarbeitungseinrichtungen besteht. Insbesondere ist anzustreben, das System zu vorhandenen Systemen integrativ zu verwenden, wobei vorhandene Systeme, insbesondere Fahrerinformations- und Assistenzsysteme durch das System zur Möglichkeit der Anpassung der Fahrsituation in der hier näher beschriebenen Art und Weise Verwendung findet.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand einer Figur näher erläutert. Dazu zeigen
- Figur 1: eine Matrix, in der Belastungsarten und Adaptionsformen dargestellt sind und
- Figur 2: ein vereinfachtes Ablaufdiagramm des Verfahrens.

### Ausführungsform(en) der Erfindung

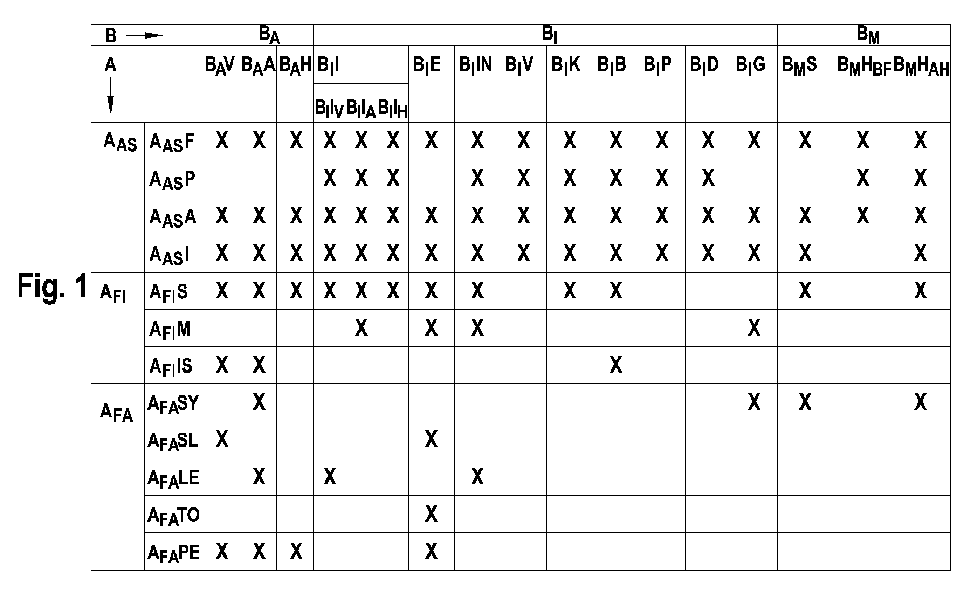

Die Figur 1 zeigt eine Matrix, in deren Spalten die Belastungsart dargestellt ist, also welche Belastung auf den Fahrer einwirkt und wie diese unterteilt, klassifiziert und gewichtet werden kann, und in deren Zeilen jeweilige Adaptionsformen dargestellt sind. Die Matrix unterscheidet die Belastungsarten B nach Belastungsart Aufmerksamkeit B_{A}, die Belastungsart Informationsverarbeitung B_{I} und die Belastungsart Motorik/Eingaben B_{M}. Um eine feinere Differenzierung von nachfolgenden Adaptionsformen zu ermöglichen, werden diese Belastungsarten weiter unterschieden, nämlich die Belastungsart Aufmerksamkeit B_{A} in die Belastungsarten visuelle Aufmerksamkeit B_{A}V, akustische Aufmerksamkeit B_{A}A und haptische Aufmerksamkeit B_{A}H. Die Belastungsart Informationsverarbeitung B_{I} wird weiter unterschieden in die Belastungsart Informationsverarbeitung Informationsaufnahme B_{I}I, Belastungsart Informationsverarbeitung Erkennung B_{I}E, Belastungsart Informationsarbeitung Interpretation B_{I}IN, Belastungsart Informationsverarbeitung Vergleichen B_{I}V, Belastungsart Informationsverarbeitung Klassifizieren B_{I}K, Belastungsart Informationsverarbeitung Bewerten B_{I}B, Belastungsart Informationsverarbeitung Planen B_{I}P, Belastungsart Informationsverarbeitung Entscheiden B_{I}D und Belastungsart Informationsverarbeitung Gedächtnis B_{I}G. Die Belastungsart Motorik/Eingaben wird weiter differenziert in die Belastungsart Motorik/Eingaben sprachlich B_{M}S, die Belastungsart Motorik/Eingaben haptisch Beine/FÜße B_{M}H_{BF} und die Belastungsart Motorik/Eingaben haptisch Arme/Hände B_{M}H_{AH}.

Die möglichen Adaptionsformen, die zeilenweise in Richtung A abgetragen sind, werden zunächst grob gruppiert. Es ergeben sich (die im Wesentlichen technischen Adaptionsformen, die sich auf Assistenzsysteme im weitesten Sinne beziehen) nämlich die Adaptionsform Assistenzsystem A_{AS}, die Adaptionsform Fahrerinformation A_{FI} und die Adaptionsform Fahreranweisung A_{FA}. Die Adaptionsform Assistenzsysteme A_{AS} wird weiter unterteilt in das Aktivieren und Deaktivieren von Funktionen A_{AS}F, das Ändern von Parametern und Wertebereichen A_{AS}P, hinsichtlich des Automatisierungsgrades A_{AS}A und hinsichtlich der Interaktionsabfolge A_{AS}I. Die Adaptionsform Fahrerinformation A_{FI} wird weiter unterschieden nach Adaption hinsichtlich des angesprochenen Sinneskanals des Fahrers A_{FI}S, nach Adaption hinsichtlich der Modalität A_{FI}M und nach Adaption hinsichtlich des Interaktionsstils A_{FI}IS. Die Adaptionsform Fahreranweisung A_{FA} wird differenziert nach Adaption der syntaktischen Ebene A_{FA}SY, nach Adaption der Spatial Layout-Ebene A_{FA}SL, hinsichtlich der lexikalischen, ikonographischen Ebene A_{FA}LE, nach Adaption hinsichtlich der Token- oder Zeichen-Ebene A_{FA}TO und nach Adaption hinsichtlich der physikalischen Ebene A_{FA}PE.

In der Matrix sind für verschiedene Belastungsarten B exemplarisch Adaptionen in den Gruppierungen Adaption nach Assistenzsystemen A_{AS}, Adaption nach Fahrerinformation A_{FI} und Adaption nach Fahreranweisung A_{FA} mit der jeweiligen weiteren Differenzierung dargestellt. Beispielsweise ist hinsichtlich einer Adaption von Assistenzsystemen A_{AS} in der Untergruppe des Aktivierens und Deaktivierens von Funktionen A_{AS}F ersichtlich, dass diese Adaptionsform für alle Arten von Belastungen B Anwendung finden kann und unter allen Arten von Belastungen B sinnvoll sein kann. Eine Änderung von Fahreranweisungen A_{FA} im Bereich der Spatial Layout-Ebene A_{FA}SL hingegen, also eine Änderung etwa von Kartenausschnitten von Zielführungssystemen oder Layout-Darstellungen von bildlich oder in Textform dargestellten Botschaften, ist sinnvoll bei Belastung des Fahrers hinsichtlich seiner visuellen Aufmerksamkeit B_{A}V und bei Belastungsformen im Bereich der Informationsverarbeitung, speziell der Erkennung B_{I}E. Eine Adaption von Fahreranweisungen im Bereich der syntaktischen Ebene A_{FA}SY ist angezeigt bei der Belastungsform akustischer Aufmerksamkeit B_{A}A sowie bei Belastungsformen der Informationsverarbeitung Gedächtnis und der Belastungsform Motorik/Eingaben in sprachlicher Hinsicht B_{M}S sowie in haptischer Hinsicht betreffend Arme und Hände B_{M}H_{AH}. Bei diesen Belastungsformen ist der Fahrer nicht aufmerksam genug, um langwierige Satzfolgen oder verschachtelte Anweisungen ausreichend sicher aufnehmen zu können (Belastungsform akustische Aufmerksamkeit B_{A}A) oder er kann sich längere Abfolgen, die ein Informationssystem ihm liefert, nicht merken (Belastungsform Informationsverarbeitung Gedächtnis). Gleichzeitig ist er gehindert, Eingaben als gesprochene Anweisungen, etwa bei Spracherkennungssystemen, in der Belastungsform Motorik/Eingaben sprachlich B_{M}S oder über Tastaturen, Tasten und/oder Auswahlräder in der Belastungsform Motorik/Eingaben haptisch Arme/Hände B_{M}H_{AH} vorzunehmen. Um diesen Belastungsformen Rechnung zu tragen, werden folglich die genannten Adaptionsformen angewendet, um die Informationen beziehungsweise die Aufforderungen so zu gestalten, dass trotz vorliegender Belastungsform die Information Aufmerksamkeit des Fahrers findet, beziehungsweise Eingaben nur in einer der Belastungsform entsprechenden Art und Weise erwartet werden.

Die Erkennung von einzelnen Belastungsformen erfolgt hierbei aufgrund einer im Fahrzeug vorhandenen Sensorik beziehungsweise einer eigenen Sensorik, die für diese Darstellung vorausgesetzt wird. Es werden verschiedene Parameter erfasst, die beispielsweise Fahrzustände widerspiegeln, also ob das Fahrzeug sich in einem Beschleunigungsvorgang befindet, ob und welche Querkräfte auf das Fahrzeug einwirken, Daten von Antiblockier- und Stabilitätssystemen, Neigungssensoren et cetera, die auf bestimmte Fahrzustände sicher schließen lassen, sowie Informationen über den Zustand des Fahrers, beispielsweise dessen Herzfrequenz, dessen Mimik und Augenbewegung, sowie von äußeren Einflüssen, insbesondere Umwelteinflüssen, beispielsweise Sonneneinstrahlung oder Dunkelheit, wobei diese Informationen hinsichtlich der genannten Belastungsformen B aufbereitet und differenziert werden. Aus den vorliegenden Informationen werden durch Gruppierung und Klassifizierung typische Belastungsarten herausgebildet, wie sie in der Figur unter B abgetragen sind. Von diesen ausgehend, werden die verschiedenen Adaptivitätsformen angewandt, wie sie unter A in der Matrix (Figur 1) abgetragen sind. Die im Fahrzeug bestehenden Fahrerassistenzsysteme werden foglich in Abhängigkeit von der Belastungsform B mit den unter A_{AS} aufgeführten Möglichkeiten adaptiert, die dem Fahrer gebotenen Informationen und Anweisungen wie unter den Adaptionsformen für Fahrerinformation und Fahreranweisung A_{FI} und A_{FA} angegeben. Diese Matrix stellt eine beispielsweise Vorgehensweise dar und ist nicht als abschließend zu betrachten. Insbesondere die technische Ausrüstung des Fahrzeuges in Hinblick auf Sensorik und Informationsbeziehungsweise Ein-/Ausgabeeinrichtungen bestimmt weitgehend, welche unter A abgetragenen Adaptionsformen überhaupt Anwendung finden können. Darüber hinaus sind für künftige technische Systeme oder Arten der Informationsbereitstellung weitere Adaptionsformen denkbar, die in Entsprechung der technischen Ausrüstung auf die jeweiligen Belastungsarten B abgestimmt sind.

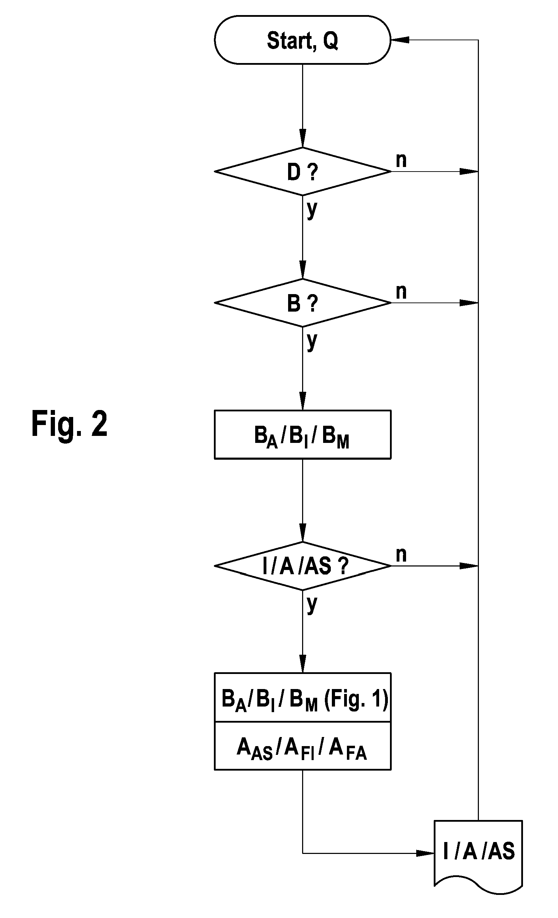

Figur 2 zeigt ein Ablaufdiagramm zur Durchführung der belastungsrelevanten Adaptionsformen A auf Fahrerinformations- beziehungsweise Assistenzsysteme. Bei Start des Verfahrens Start wird eine Abfrage Q der im Fahrzeug vorhandenen Sensorik durchgeführt. Sodann wird auf das Vorhandensein von Daten D dieser Sensorik geprüft; sind keien Daten D vorhanden, wird das Verfahren an den Start rückverzeigt. Sind Daten D der Sensorik vorhanden, wird geprüft, ob diese belastungsrelevant sind, sie also auf eine Belastungsform B, wie aus Figur 1 ersichtlich, schließen lassen. Ist dies nicht der Fall, wird an den Start rückverzweigt. Ist dies der Fall, werden die Daten D gruppiert nach B_{A}/B_{I}/B_{M} beziehungsweise nach weiteren Untergliederungen, wie aus Figur 1 ersichtlich. Es wird nachfolgend geprüft, ob eine Informationsbereitstellung beziehungsweise Anweisung für den Fahrer oder der Eingriff eines Assistenzsystems I/A/AS abgefragt oder durch Fahrerzustandsdaten relevant ist. Ist dies nicht der Fall, wird das Verfahren an den Start rückverzweigt. Ist dies der Fall, wird die Adaptivitätsmatrix (Figur 1) auf die Informationen I, Anweisungen A beziehungsweise Assistenzsysteme AS in Entsprechung der jeweiligen Belastungsform B_{A}, B_{I} und/oder B_{M} angewandt und sodann in einem weiteren Schritt die Information I und/oder die Anweisung A ausgegeben beziehungsweise der Eingriff eines Assistenzsystems AS durchgeführt, in Abhängigkeit vom Ergebnis der Anwendung der Matrix nach Figur 1. Das Verfahren wird sodann zum Start rückverzweigt. Die Rückverzweigungen haben jeweils den Sinn, das Verfahren mit jeweils aktuellen, momentan relevanten Daten kontinuierlich neu durchführen zu können.

Das Verfahren kann im stand-alone-Betrieb als zwischengeschaltete Stufe im Fahrzeug vorhandener Systeme oder in diese integriert betrieben werden.

## Patentansprüche

1. Verfahren zur Möglichkeit der Anpassung der Fahrsituation eines von einem Fahrer geführten Fahrzeugs, insbesondere Kraftfahrzeugs, wobei der Fahrerzustand und/oder die Fahrsituation berücksichtigt werden und wobei mindestens ein Assistenzsystem, mindestens eine Fahrerinformation und/oder mindestens eine Fahreranweisung in Abhängigkeit von der Art der momentan auf den Fahrer wirkenden Belastung beeinflusst wird.

2. Verfahren nach Anspruch 1, **dadurch gekennzeichnet, dass** die Art der momentan auf den Fahrer wirkenden Belastung differenziert wird nach Aufmerksamkeit, Informationsverarbeitung und Motorik/Eingaben des Fahrers.

3. Verfahren nach Anspruch 2, **dadurch gekennzeichnet, dass** die Belastungsart Aufmerksamkeit differenziert wird nach visueller, akustischer und/oder haptischer Aufmerksamkeit.

4. Verfahren nach einem der vorhergehenden Ansprüche, **dadurch gekennzeichnet, dass** die Belastungsart Informationsverarbeitung differenziert wird nach Informationsaufnahme, Erkennung, Interpretation, Vergleichen, Klassifizieren, Bewerten, Planen, Entscheiden und/oder Gedächtnis.

5. Verfahren nach einem der vorhergehenden Ansprüche, **dadurch gekennzeichnet, dass** die Informationsaufnahme differenziert wird nach visueller, akustischer und/oder haptischer Informationsaufnahme.

6. Verfahren nach einem der vorhergehenden Ansprüche, **dadurch gekennzeichnet, dass** die Belastungsart Motorik/Eingaben differenziert wird nach sprachlichen, haptischen mit Beinen und/oder Füßen, und/oder haptischen mit Armen und/oder Händen erfolgenden Eingaben.

7. Verfahren nach einem der vorhergehenden Ansprüche, **dadurch gekennzeichnet, dass** die Beeinflussung des mindestens einen Assistenzsystems erfolgt durch Aktivieren/Deaktivieren einer Funktion, Ändern mindestens eines Parameters und/oder Wertebereichs, Anpassung des Automatisierungsgrades und/oder Anpassung der Interaktionsabfolge.

8. Verfahren nach einem der vorhergehenden Ansprüche, **dadurch gekennzeichnet, dass** die Beeinflussung der Fahrerinformation erfolgt durch Anpassung des Sinneskanals, der Modalität und/oder des Interaktionsstils.

9. Verfahren nach einem der vorhergehenden Ansprüche, **dadurch gekennzeichnet, dass** die Beeinflussung der Fahreranweisung erfolgt durch Anpassung der syntaktischen Ebene, der Spatial Layout-Ebene, der lexikalischen beziehungsweise ikonographischen Ebene, der Token- oder Zeichen-Ebene und/oder der physikalischen Ebene.

10. System zur Möglichkeit der Anpassung der Fahrsituation eines von einem Fahrer geführten Fahrzeugs, insbesondere Kraftfahrzeugs, wobei der Fahrerzustand und/oder die Fahrsituation berücksichtigt wird/werden und wobei mindestens ein Assistenzsystem (AS), mindestens eine Fahrerinformation (FI) und/oder mindestens eine Fahreranweisung (FA) in Abhängigkeit von der Art der momentan auf den Fahrer wirkenden Belastung (B) beeinflusst wird.
